# EUROPÄISCHE PATENTANMELDUNG

(11) **EP 1 475 518 A2**
(43) Veröffentlichungstag der Anmeldung: **10.11.2004**
(21) Anmeldenummer: 04009376.7
(22) Anmeldetag: 21.04.2004
(51) Int. Cl.: F01L 1/34, F01L 1/46

(54) **Buchse für ein Hydraulikventil**

(30) Priorität: 03.05.2003 DE 10319831
(71) Anmelder: HYDRAULIK-RING GMBH, 97828 Marktheidenfeld (DE)
(72) Erfinder: Cornea, Marius, 97816 Lohr/Main (DE); Weigand, Bernd, 97816 Lohr/Main (DE)
(74) Vertreter: Jackisch-Kohl, Anna-Katharina

(57) **Zusammenfassung**

Beispielsweise für Cartridgeventile bei Nockenwellenverstelleinrichtungen in Kraftfahrzeugen werden Buchsen eingesetzt, über deren Öffnungen (4 bis 6) Hydraulikmedium Zuleitungen im Motorblock oder im Ventilaufnahmeblock zugeführt wird. Damit die Buchsen kostengünstig hergestellt werden können, ist die Wandung der Öffnungen (4 bis 6) wenigstens über einen Teil ihres Umfanges als Formschräge (15) ausgebildet. Dadurch können die Öffnungen (4 bis 6) im Rohteil vorgesehen werden, ohne daß mechanische Arbeitsgänge nachträglich erforderlich sind. Die Buchsen werden für Cartridgeventile bei Nockenwellenverstellern für Kraftfahrzeuge eingesetzt.

## Beschreibung

Die Erfindung betrifft eine Buchse für ein Hydraulikventil nach dem Oberbegriff des Anspruches 1.

Solche Buchsen werden beispielsweise für Cartridgeventile bei Nockenwellenverstelleinrichtungen eingesetzt. Über die Öffnungen in der Buchse wird das Hydraulikmedium Zuleitungsbohrungen zugeführt, die sich im Zylinderkopf, einem Motorblock oder einem Ventilaufnahmeblock befinden. Die Buchsen werden durch Drehen aus Stangenmaterial aus Stahl oder Leichtmetall gefertigt oder als Leichtmetall-Gußteile hergestellt. Die Öffnungen werden mechanisch gefertigt oder zumindest mechanisch nachbearbeitet. Dadurch sind die Buchsen teuer in der Herstellung.

Der Erfindung liegt die Aufgabe zugrunde, die gattungsgemäße Buchse so auszubilden, daß sie kostengünstig hergestellt werden kann.

Diese Aufgabe wird bei der gattungsgemäßen Buchse erfindungsgemäß mit den kennzeichnenden Merkmalen des Anspruches 1 gelöst.

Bei der erfindungsgemäßen Buchse wird die Wandung der Öffnungen wenigstens über ein Teil des Umfanges als Formschräge ausgebildet. Dadurch können die Öffnungen bereits im Rohteil vorgesehen werden, ohne daß mechanische Arbeitsgänge nachträglich erforderlich sind. So kann die Buchse als Druckguß- oder Spritzgußteil hergestellt werden, wobei für die Herstellung der Öffnungen zusätzliche Schieber im entsprechenden Druckguß- oder Spritzwerkzeug nicht notwendig sind. Die erfindungsgemäße Buchse kann darum sehr kostengünstig hergestellt werden.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsformen näher erläutert. Es zeigen
- Fig. 1: eine erfindungsgemäße Buchse für ein Hydraulikventil in einem Schnitt längs der Linie I-I in Fig. 2,
- Fig. 2: einen Schnitt längs der Linie II-II in Fig. 1,
- Fig. 3: in Seitenansicht die Buchse gemäß Fig. 1,
- Fig. 4: die Buchse in perspektivischer Darstellung,
- Fig. 5: einen Schnitt längs der Linie V-V in Fig. 6 durch eine zweite Ausführungsform einer erfindungsgemäßen Buchse für ein Hydraulikventil,
- Fig. 6: einen Schnitt längs der Linie VI-VI in Fig. 5,
- Fig. 7: die Buchse gemäß Fig. 5 in Seitenansicht,
- Fig. 8: die Buchse gemäß Fig. 5 in perspektivischer Darstellung.

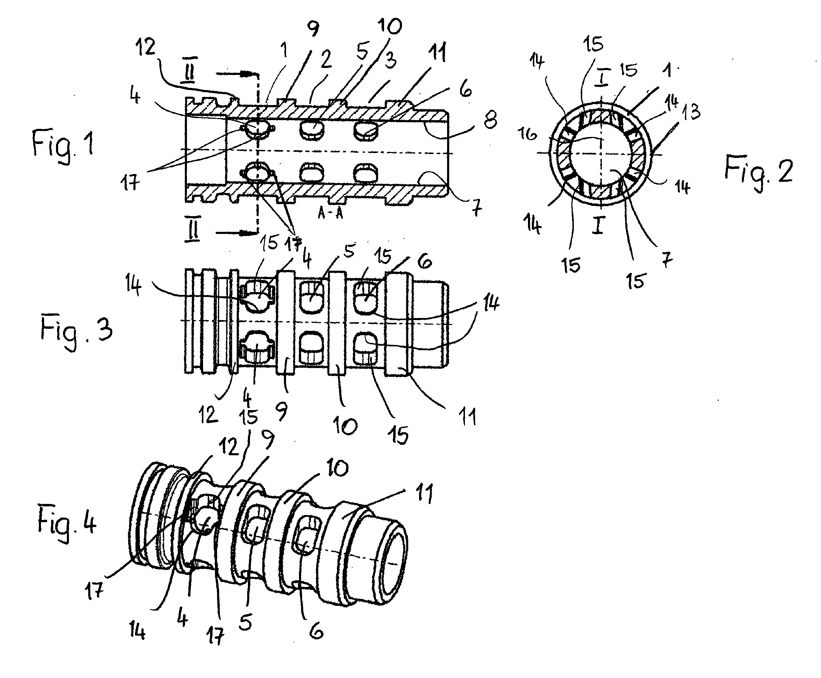

Der hydraulische Teil von Cartridgeventilen, wie sie bei Nockenwellenverstellern in der Kraftfahrzeugtechnik eingesetzt werden, besteht in der Regel aus einer Buchse, in der sich ein Kolben axial bewegt, um hydraulische Ölströme an die jeweiligen Anschlüsse zu verteilen. Die Buchse gemäß den Fig. 1 bis 4 weist am Umfang Außenringkanäle 1 bis 3 auf, durch die das Druckmedium zu den sich im Aufnahmeblock, wie dem Zylinderkopf, dem Motorblock oder einem besonderen Ventilaufnahmeblock, befindenden Zuleitungsbohrungen geleitet wird. Die Außenringkanäle 1 bis 3 sind über ihren Umfang mit gleichmäßig oder ungleichmäßig verteilt angeordneten Öffnungen 4 bis 6 versehen, die die Außenringkanäle 1 bis 3 mit dem Innenraum 7 der Buchse verbinden. Der Innenraum 7 wird von einem zylindrischen Mantel 8 begrenzt, der nahezu über die gesamte Länge der Buchse konstanten Durchmesser aufweist. Lediglich an dem in Fig. 1 rechten, außerhalb des Bereiches der Außenringkanäle 1 bis 3 befindlichen Ende hat der Innenmantel 8 geringfügig größeren Durchmesser als im übrigen Bereich der Buchse.

Die Außenringkanäle 1 bis 3 sind durch Ringstege 9 bis 11 voneinander getrennt. Der Außenringkanal 1 wird außerdem durch einen Ringsteg 12 axial begrenzt, der den Außenringkanal 1 in Richtung auf das benachbarte Ende der Buchse axial begrenzt.

Die Buchse wird durch ein Leichtmetall-Druckgußteil oder ein Kunststoff-Spritzgußteil hergestellt, in das die Öffnungen 4 bis 6 bereits beim Druckguß- bzw. beim Spritzgußprozeß eingebracht werden. Dadurch ist eine nachfolgende mechanische Bearbeitung nicht notwendig.

Fig. 2 zeigt mit einer strichpunktierten Linie die Trennebene 13 zwischen den Druckguß- bzw. Spritzwerkzeugteilen. Die Öffnungen 4 bis 6 sind so ausgebildet, daß im Werkzeug zusätzliche Schieber nicht erforderlich sind, so daß die Buchse sehr preisgünstig hergestellt werden kann. Um dies zu erreichen, sind die Öffnungen 4 bis 6 so ausgebildet, daß ihre Seitenwände teilweise als Formschrägen ausgebildet sind. Wie Fig. 2 zeigt, liegt der eine Teil 14 der Wandung der Öffnungen 4 bis 6 etwa in einer Radialebene. Der gegenüberliegende Teil 15 der Wandung der Öffnungen 4 bis 6 ist als Formschräge ausgebildet, die im Radialschnitt gemäß Fig. 2 mit einer Radialebene 16 der Buchse einen spitzen Winkel einschließt, der sich in Richtung auf den Innenraum 7 der Buchse öffnet (Fig. 2). Die Öffnungen 4 bis 6 verjüngen sich somit von der Außenseite der Buchse aus nach innen.

Die Öffnungen 4 im Außenringkanal 1 sind mit einander gegenüberliegenden Feinsteueröffnungen 17 versehen, die wesentlich kleineren Querschnitt haben als die Öffnungen 4 und durch Vertiefungen in der Wandung der Öffnungen 4 gebildet werden. Durch diese Feinsteueröffnungen 17 wird erreicht, daß beim Verschieben des Kolbens je nach dessen Stellung zunächst nur die Feinsteueröffnung 17 freigegeben wird, die nur eine geringe Menge an Medium hindurchläßt. Erst nach einem entsprechenden Verschiebeweg des Kolbens werden die Öffnungen 4 mehr oder weniger freigegeben.

Die Feinsteueröffnungen bzw. -nuten können auch bei den anderen Öffnungen 5,6 eingebracht werden. Die Feinsteueröffnungen 17 können auch nur an einem Teil der Bohrungs- bzw. Öffnungsebene angebracht sein.

Die Öffnungen 4 sind untereinander gleich ausgebildet. Die Öffnungen 5 und 6 der Außenringkanäle 2 und 3 sind im Ausführungsbeispiel ohne Feinsteueröffnungen ausgebildet. Innerhalb des Außenringkanals 2 bzw. 3 sind die Öffnungen 5 bzw. 6 wiederum gleich ausgebildet.

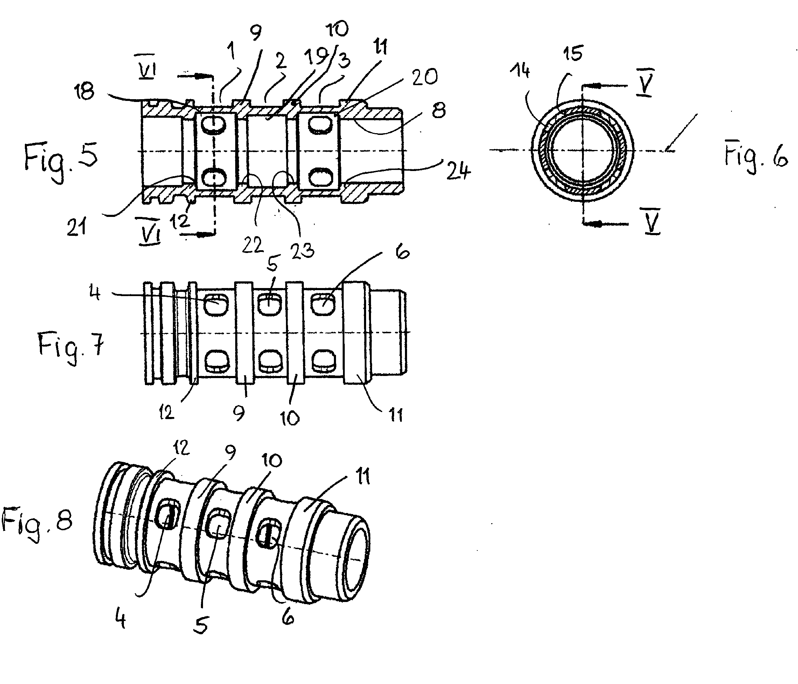

Die Buchse gemäß den Fig. 5 bis 8 hat außer den Außenringkanälen 1 bis 3 auch Innenringkanäle 18 bis 20, die in der Innenwand 8 der Buchse vorgesehen sind. Die Innenringkanäle 18 bis 20 liegen auf Höhe der Außenringkanäle 1 bis 4 und sind in axialer Richtung geringfügig breiter als die Außenringkanäle. Die Innenringkanäle 18 bis 20 sind in Axialrichtung durch Ringstege 21 bis 24 axial begrenzt. Sie sind schmaler als die Ringstege 9 bis 12 an der Außenseite der Buchse. Die Ringstege 21 bis 24 haben gleichen Innendurchmesser, so daß der (nicht dargestellte) Kolben einwandfrei in der Buchse geführt wird.

Die Öffnungen 4 bis 6 sind über den Umfang der Buchse gleichmäßig oder ungleichmäßig verteilt angeordnet und verbinden die Außenringkanäle 1 bis 3 mit den Innenringkanälen 18 bis 20. Die Öffnungen 4 sind im Unterschied zur vorigen Ausführungsform nicht mit Feinsteueröffnungen versehen.

Die Öffnungen 4 bis 6 sind im übrigen gleich ausgebildet wie bei der vorigen Ausführungsform. Die Öffnungen haben den Wandungsteil 14, der etwa radial verläuft und den Wandungsteil 15, der als Formschräge entsprechend der vorherigen Ausführungsform ausgebildet ist. Die Öffnungen können in einer Ebene z. B. auch unterschiedlich gestaltet sein, z. B. zwei schmale und zwei breite Öffnungen.

Bei den beschriebenen Ausführungsformen sind die Öffnungen 4 bis 6 direkt im Rohteil vorgesehen, so daß nachträglich mechanische Arbeitsgänge nicht notwendig sind. Die Öffnungen 4 bis 6 sind so gestaltet, daß die Buchsen in einem einfachen Druckguß- oder Spritzwerkzeug ohne zusätzliche Schieber gegossen werden können. Die Öffnungen 4 bis 6 bilden radiale Druckmittelanschlüsse, zum Beispiel einen Druckanschluß und Arbeitsanschlüsse, denen jeweils der Außenringkanal 1 bis 3 als Druckmediumverteilkanal zugeordnet ist. Bei der Ausführungsform nach den Fig. 5 bis 8 kann den Öffnungen 4 bis 6 auch der Innenringkanal 18 bis 20 zugeordnet sein. Anstelle der Ringkanäle als Verteilkanäle können den Öffnungen 4 bis 6 auch radiale Zuleitungsöffnungen zugeordnet werden. Beim Ausführungsbeispiel nach den Fig. 1 bis 4 kann durch die Feinsteueröffnungen 17 die hydraulische Kennliniencharakteristik beeinflußt werden.

## Patentansprüche

1. Buchse für ein Hydraulikventil, mit Öffnungen in der Buchsenwand für den Durchtritt von Hydraulikmedium,
**dadurch gekennzeichnet, daß** die Wandung der Öffnungen (4 bis 6) wenigstens über einen Teil ihres Umfanges als Formschräge (15) ausgebildet ist.

2. Buchse nach Anspruch 1,
**dadurch gekennzeichnet, daß** die Formschräge (15) unter einem spitzen Winkel zur Radialebene (16) der Buchse liegt.

3. Buchse nach Anspruch 2,
**dadurch gekennzeichnet, daß** sich der Winkel radial nach innen öffnet.

4. Buchse nach einem der Ansprüche 1 bis 3,
**dadurch gekennzeichnet, daß** die Öffnungen (4 bis 6) in Außenringkanälen (1 bis 3) liegen.

5. Buchse nach einem der Ansprüche 1 bis 4,
**dadurch gekennzeichnet, daß** die Buchse konstanten Innendurchmesser hat.

6. Buchse nach einem der Ansprüche 1 bis 4,
**dadurch gekennzeichnet, daß** die Buchse an ihrer Innenwand (8) Innenringkanäle (18 bis 20) aufweist, die vorteilhaft über die Öffnungen (4 bis 6) mit den Außenringkanälen (1 bis 3) verbunden sind.

7. Buchse nach einem der Ansprüche 1 bis 6,
**dadurch gekennzeichnet, daß** die Außen- und die Innenringkanäle (1 bis 3, 18 bis 20) durch Ringstege (9 bis 12, 21 bis 24) voneinander getrennt sind.

8. Buchse nach Anspruch 7,
**dadurch gekennzeichnet, daß** die Ringstege (21 bis 24) der Innenringkanäle (18 bis 20) gleichen Durchmesser haben.

9. Buchse nach einem der Ansprüche 1 bis 8,
**dadurch gekennzeichnet, daß** die Buchse ein Druckgußteil, vorteilhaft ein Leichtmetall-Druckgußteil ist.

10. Buchse nach einem der Ansprüche 1 bis 8,
**dadurch gekennzeichnet, daß** die Buchse ein Spritzgußteil ist.

11. Buchse nach Anspruch 10,
**dadurch gekennzeichnet, daß** die Buchse ein Kunststoff-Spritzgußteil ist.

12. Buchse nach einem der Ansprüche 1 bis 11,
**dadurch gekennzeichnet, daß** wenigstens ein Teil der Öffnungen (4) mit wenigstens einer Feinsteueröffnung (17) versehen ist, die vorteilhaft durch eine Vertiefung in der Wandung (14, 15) der Öffnung (4) oder Öffnungen (4 bis 6) gebildet ist.
